# EUROPEAN PATENT SPECIFICATION

(11) **EP 3 496 889 B1**
(45) Date of publication and mention of the grant of the patent: **02.08.2023**
(21) Application number: 17752458.4
(22) Date of filing: 09.08.2017
(51) Int. Cl.: B23K 9/04, B23K 10/02, B23K 26/342, B33Y 10/00, B33Y 30/00, B29C 64/20, B23K 35/28

(54) **ADDITIVE MANUFACTURING PROCESS**
VERFAHREN ZUR GENERATIVEN FERTIGUNG
PROCÉDÉ DE FABRICATION ADDITIVE

(30) Priority: 11.08.2016 GB 201613806
(43) Date of publication of application: 19.06.2019
(73) Proprietor: BAE Systems PLC, London SW1Y 5AD (GB)
(72) Inventor: PRICE, Howard, James, Preston Lancashire PR4 1AX (GB)
(74) Representative: BAE SYSTEMS plc Group IP Department
(86) International application number: PCT/GB2017/052346
(87) International publication number: WO 2018/029469

(56) References cited:
- EP-A2- 1 302 269
- WO-A1-2016/092253
- CN-A- 105 414 746
- JP-A- H03 107 470

## Description

### FIELD OF THE INVENTION

The present invention relates to additive manufacturing processes.

### BACKGROUND

Wire-based additive manufacture, also known as wire-fed additive manufacture includes, for example, wire arc additive manufacture (WAAC) and laser additive manufacture (LAM). WAAM is the deposition of metal, via a fusion welding process such as plasma arc welding or gas tungsten arc welding, onto a pre-existing substrate that allows a 3-dimensional part to be built. The technology is applicable to, e.g., metallic alloys such as titanium and aluminium. LAM is an analogous process to WAAM whereby metal is deposited by a laser welding process.

In a separate field, for aerospace grade aluminium alloys, the norm is to apply a solution heat treatment and age hardening process involving, firstly, a solution treatment operation comprising heating to high temperature (approximately 500°C) and rapidly cooling by quenching into cold water (with or without polyalkylene glycol additive), and then applying an age hardening process. The solution treatment process creates what is known as a "supersaturated solid solution" of alloy elements randomly distributed within the aluminium matrix. The age hardening process (also referred to as "precipitation hardening") increases the strength of the alloy by promoting the formation of precipitates from the super saturated solid solution by the diffusion of solute atoms (the alloy additions) dispersed in the solvent (the aluminium matrix). The age hardening process typically comprises exposure of the alloy to an intermediate temperature, significantly lower than that used for the solution treatment, for a period of time. The age hardening temperature can range from ambient/room temperature (typically 15°C to 30°C) to typically but not limited to 200°C. As the precipitation reaction is a process involving diffusion of atoms the durations are generally longer when lower temperatures are used, and shorter when higher temperatures are used. At ambient temperature (known as "natural ageing") the process will normally take several days to reach a conclusion and the strength achieved will tend not to be the maximum possible. Natural ageing is often used when high levels of fracture toughness are desirable. Without the dual application of solution treatment and age hardening the strength of aluminium alloys are generally very low and of no structural merit.

The quench operation included within the solution treatment process tends to be highly disruptive to formed parts. Substantial distortion tends to occur and there is the potential for very high levels of residual stresses to be created. The traditional manufacture of heat treated aluminium products has to overcome the problems of distortion and residual stress by including means of distortion control and stress relief. For example, aluminium plate is normally subjected to a "controlled stretch" following solution treatment. This involves stretching the plate along the longitudinal axis to impart between 2% and 3% permanent set (elongation). This tends to reduce or remove the distortion associated with the quench and also reduces the internal residual stresses resulting in an outer shell that is in residual compressive stress and a balancing inner region that is in residual tensile stress. The level of stress is a function of the elastic limit and yield point when the stretch is applied. By stipulating that the stretch be done as soon as practicable after solution treatment the degree of natural ageing that occurs prior to stretch is limited and so the stress levels will be minimised. The controlled stretching of plate typically requires that the plate cross section is uniform and that the total cross-sectional area is within the force limits of the available stretching machine. For wide plate products, the capacity of the stretcher will limit the maximum thickness.

Another example of managing the stresses due to solution heat treatment includes the use of cold compression of forgings after solution heat treatment. This aspect tends to severely limit the ability to produce large aluminium alloy forgings. The very largest forging machines typically have maximum tonnage limits between about 50000 and 80000 tonnes and even at this capacity the size of forgings that can be made is somewhat limited.

Wire-based additive manufacturing processes for aluminium and aluminium alloys remain in a development phase, and have traditionally used conventional alloy types. The welding wire is typically derived from what is known as the "ingot metallurgy" route. This is where the alloy is first cast by conventional melting processes into a large ingot and then either hot rolled or hot extruded to a manageable product size before finally being cold drawn into wire.

In a separate field, Rapid Solidification Processing (RSP) is used to form more highly alloyed compositions. RSP tends to involve very rapid solidification rates (RSR) from an alloy's molten stage. Aluminium alloys made by this RSP (i.e. aluminium based RSR alloys) might typically contain very high levels of iron and/or chromium and have much-enhanced elevated temperature performance and corrosion resistance. However, the RSP manufacturing route tends to be uneconomic for most applications.

WO2016/092253, on which the preamble of claim 1 is based, discloses a method and apparatus for forming an object by additive layer manufacturing. The method comprises: a) applying, by a heat source, heat to a portion of a surface of a workpiece sufficient to melt said portion; b) adding material to the melted portion and moving the heat source relative to the workpiece whereby progressively to form a layer of material on the workpiece; c) cooling the formed layer to bring at least part of the layer to a state of crystallisation, thereby producing a modified workpiece; d) peening, using a plurality of independently controllable impact treatment devices, the modified workpiece so as to plastically deform the cooled at least part of the layer; and repeating steps a) to d) as required whereby to form the object.

### SUMMARY OF THE INVENTION

The present inventors have realised that, a need to solution heat treat aluminium and aluminium alloys tends to be a major barrier to the wider adoption of wire-based additive manufacturing process (such as WAAM or LAM) for aluminium. The present inventors have realised that it would be desirable to solution heat treat the aluminium alloy part during its formation by wire-based additive manufacture.

The present inventors have further realised that it would be desirable to provide a process which allows more highly alloyed compositions to be produced than is possible via ingot metallurgy. The present inventors have further realised that a cost effective RSP suitable for more cheaply producing more highly alloyed compositions is desirable.

In a first aspect, the present invention provides the method as described in the appended claims.

The present disclosure also provides an additive manufacturing apparatus for fabricating a three-dimensional object. The object may be formed from an RSR-grade alloy. The apparatus comprises: means for directing energy onto a growth surface of a workpiece to form thereon a liquid melt-pool; means for feeding additional material (e.g. in the form of a wire) into the melt-pool so as to cause the additional material to become incorporated into the liquid of the melt-pool; and means for cryogenically cooling the liquid melt-pool, thereby to achieve a cooling rate of the liquid melt pool of at least about 100°C per second and to cause the liquid melt-pool to solidify.

The cooling rate of the liquid melt pool may be at least about 1 ,000°C per second. The cooling rate of the liquid melt pool may be at least about 10,000°C per second.

The means for cryogenically cooling the liquid melt-pool may be arranged to cryogenically cool the liquid melt-pool after incorporation of the additional material into the liquid of the melt-pool, thereby causing the liquid melt-pool with the additional material incorporated therein to solidify.

The means for cryogenically cooling the liquid melt-pool may comprise means for supplying cryogenic coolant directly to the liquid melt-pool.

The cryogenic coolant may have a temperature of about -50°C or below. The cryogenic coolant may have a temperature of about -150°C or below. The cryogenic coolant may be a cryogenic liquid or gas. The cryogenic coolant may be selected from a group consisting of liquid argon, liquid helium, liquid nitrogen, and liquid carbon dioxide.

The means for feeding additional material into the melt-pool may be a means for feeding a wire into the melt-pool.

The additional material may be aluminium or an aluminium alloy.

The additional material may be an alloy that has been formed by rapid solidification rate, RSR, processing. The additional material may be an RSR grade-alloy.

The additive manufacturing apparatus may further comprise means for maintaining a low temperature environment in which to locate the workpiece. The low temperature environment may have a temperature at or below about -40°C. The additive manufacturing apparatus may further comprise machining apparatus for machining the workpiece within the low temperature environment.

The additive manufacturing apparatus may be for fabricating a solution heated treated object.

The present disclosure also provides an additive manufacturing method for fabricating a three-dimensional object. The method comprises: directing energy onto a growth surface of a workpiece to form thereon a liquid melt-pool; feeding additional material into the melt-pool so as to cause the additional material to become incorporated into the liquid of the melt-pool; and cryogenically cooling the liquid melt-pool, thereby to achieve a cooling rate of the liquid melt pool of at least about 100°C per second and to cause the liquid melt-pool to solidify.

The present disclosure also provides additive manufacturing apparatus for fabricating a three-dimensional object, the apparatus comprising: means for directing energy onto a growth surface of a workpiece to form thereon a liquid melt-pool; means for feeding additional material into the melt-pool so as to cause the additional material to become incorporated into the liquid of the melt-pool; and means for cryogenically cooling the liquid melt-pool, thereby causing the liquid melt-pool to solidify.

The means for cryogenically cooling the liquid melt-pool may be arranged to cryogenically cool the liquid melt-pool after incorporation of the additional material into the liquid of the melt-pool, thereby causing the liquid melt-pool with the additional material incorporated therein to solidify. The means for cryogenically cooling the liquid melt-pool may comprise means for supplying cryogenic coolant directly to the liquid melt-pool. The cryogenic coolant may have a temperature of about -50°C or below, or about -100°C or below, or about -150°C or below. The cryogenic coolant may be a cryogenic liquid or gas. The cryogenic coolant may be selected from a group consisting of liquid argon, liquid helium, liquid nitrogen, and liquid carbon dioxide.

The means for feeding additional material into the melt-pool may be a means for feeding a source wire into the melt-pool. The additional material may be aluminium or an aluminium alloy. The additional material may be an alloy formed by rapid solidification rate (RSR) processing.

The additive manufacturing apparatus may be for fabricating a solution heated treated object.

The present disclosure also provides an additive manufacturing method for fabricating a three-dimensional object, the method comprising: directing energy onto a growth surface of a workpiece to form thereon a liquid melt-pool; feeding additional material into the melt-pool so as to cause the additional material to become incorporated into the liquid of the melt-pool; and cryogenically cooling the liquid melt-pool, thereby causing the liquid melt-pool to solidify.

The present disclosure also provides additive manufacturing apparatus for fabricating a three-dimensional object, the apparatus comprising: means for directing energy onto a growth surface of a workpiece to form thereon a liquid melt-pool; means for feeding additional material into the melt-pool so as to cause the additional material to become incorporated into the liquid of the melt-pool; and means for supplying cryogenic coolant directly to the liquid melt-pool, thereby causing the liquid melt-pool to solidify.

The present disclosure also provides apparatus for forming elongated metal products, the apparatus comprising: an elongate casting channel; means for supplying molten metal into the casting channel; and means for cryogenically cooling the casting channel thereby to solidify the molten metal in the casting channel.

The means for supplying the molten metal into the casting channel may be configured to deliver the molten metal under positive pressure to the casting channel from the source.

The means for cryogenically cooling the casting channel may comprise means for supplying cryogenic coolant to the casting channel. The cryogenic coolant may have a temperature of about -50°C or below, or about -100°C or below, or about -150°C or below. The cryogenic coolant may be selected from a group consisting of liquid argon, liquid helium, liquid nitrogen, and liquid carbon dioxide.

The casting channel may comprise a tapered portion. The casting channel may comprise a copper tube.

The molten metal may be aluminium or an aluminium alloy. The apparatus may be for forming metal products by rapid solidification rate (RSR) processing. The molten metal may be an RSR alloy or composition.

The apparatus may comprise a spool for collecting the elongated metal product.

The present disclosure also provides a method for forming elongated metal products, the method comprising: providing an elongate casting channel; supplying molten metal into the casting channel; and cryogenically cooling the casting channel thereby to solidify the molten metal in the casting channel.

### BRIEF DESCRIPTION OF THE DRAWINGS

Figure 1 is a schematic illustration (not to scale) showing a wire-based additive manufacturing apparatus; and
Figure 2 is a schematic illustration (not to scale) showing a wire production apparatus.

### DETAILED DESCRIPTION

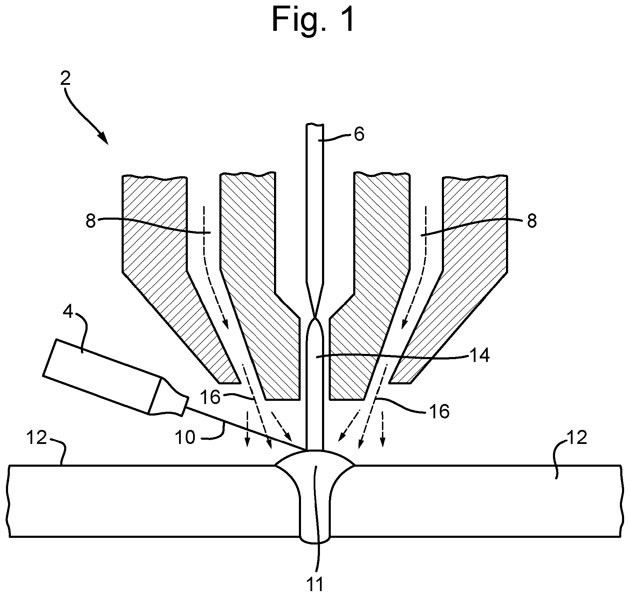

Figure 1 is a schematic illustration (not to scale) showing an embodiment of a wire-based additive manufacturing apparatus 2. The wire-based additive manufacturing apparatus is a WAAM apparatus.

The wire-based additive manufacturing apparatus 2 comprises a wire supplier 4, an electrode 6, and a coolant supplier 8. In operation, the wire supplier 4 feeds a metal wire 10 to a point 11 on or proximate to an upper surface of a metal workpiece or base plate 12. Also, an electric arc 14 is formed between the electrode 6 and the metal workpiece 12 and/or wire 10 at the point 11, thus heating and melting the wire 10 and the workpiece 12 at the point 11 and joining together the wire 10 and the workpiece 12. Thus, the material of the wire 10 is deposited on to the workpiece 12.

At the same time as the above described welding process of welding the wire 10 to the workpiece 12, the coolant supplier 8 supplies coolant 16 directly to the molten wire/workpiece material at or proximate to the point 11. Thus, the wire-based additive manufacturing apparatus 2 employs, directly as part of the WAAM process, a very effective quench using, in this embodiment, a spray of either liquid or gaseous coolant 16, such as but limited to nitrogen, argon, carbon dioxide, or helium. The coolant spray 16 is directed immediately onto or adjacent to (e.g. on the trailing edge side of) the molten material (i.e. the weld 11), and in a manner not to interfere with the weld process. In this embodiment, the coolant is applied directly to liquid material.

In this embodiment, the coolant spray 16 is directed via the same path that is conventionally used to apply a shielding gas in a conventional plasma welding process. For example, in this embodiment, the shield gas of a conventional wire-based additive manufacturing apparatus may be replaced by the coolant 16 in the present invention. Alternatively or in addition, cryogenic quenching media could be directed from a separate nozzle or additionally from a separate nozzle.

In this embodiment, the coolant 16 is a cryogenic liquid or gas. Preferably, the coolant 16 is applied to the molten metal and has a temperature of about - 150°C or below, about -200°C or below or about -250°C or below. In some embodiments, the coolant 16 may have a temperature of above about -150°C, for example, a temperature between about -100°C and about -150°C, or between about -100°C and about -50°C.

In this embodiment, the weld itself is kept sufficiently fine so as to minimise the size of the weld pool with the aim of keeping both the area of molten metal and the surrounding hot zone to a minimum. This may for example be achieved or facilitated by using a wire having a diameter of about 2mm or less, or preferably about 1.5mm or less, or more preferably about 1mm or less.

Advantageously, the described process tends to achieve in situ solution heat treatment.

Advantageously, the cooling rate for the weld 11 that is achieved tends to be sufficient for an RSR process to be successfully executed. A cooling rate of at least about 1,000°C per second, and preferably much faster is achieved. For example, the cooling rate may be between about 1,000°C/s and about 10,000°C/s (e.g. about 2,000°C/s, about 3,000°C/s, about 4,000°C/s, about 5,000°C/s, about 6,000°C/s, about 7,000°C/s, about 8,000°C/s, about 9,000°C/s, or about 10,000°C/s), or up to 10⁴°C per second. Nevertheless, (and not in the method of the present invention) some RSR alloys can be formed using slower cooling rates, e.g. about 100°C/s, about 200°C/s, about 300°C/s, about 400°C/s, about 500°C/s, about 600°C/s, about 700°C/s, about 800°C/s, or about 900°C/s. For example, it tends to be possible to form aluminium-magnesium-scandium RSR alloys with high scandium content at substantially slower cooling rate, e.g. a cooling rate of 100°C per second may be sufficient to form a supersaturated solid solution with 0.7wt.% Sc.

Conventionally, the cooling rate for heat treatment is typically less than that for RSR. However, advantageously, using the above described system and method, RSR processing tends to be achievable by locally melting and direct cooling by spraying cooling liquid or gas 16 (e.g. cryogenic liquid or gas) directly onto the molten metal 11 before solidification can occur. In other words, advantageously, using the above described system and methods, cooling rates fast enough to provide for RSR processing tend to be achievable.

In some embodiments, the above described cooling is augmented by operating the entire additive manufacturing process in a cold environment (e.g. an environment below about -40°C). By so doing, the workpiece being welded to tends to also provide a heat sink and so tends to make the attainment of the desired cooling rates easier to achieve. The size of any heat affected zone also tends to be reduced.

In some embodiments, additional cooling may be applied to the workpiece at or proximate to the workpiece. For example, further cooling (e.g. by cryogenic liquid spray or gas) may be applied to the workpiece, for example on a surface of the workpiece opposite to the surface upon which the weld pool 11 is formed. Preferably, such additional cooling is applied directly opposite to the point 11.

The process of wire-based additive manufacturing and in situ solution heat treatment may also be combined with other processes such as stress relief by mechanical cold working. This could take the form of rolling or peening (e.g. "dengling", shot peening, or hydraulic chisel peening). In addition or instead of stress relief processes, machining, e.g. using either a robot or gantry system, could be undertaken as an aligned process with the part being deposited and machined whilst inside the same machine facility with machining potentially being immediately followed by more wire-based additive manufacturing, and so on. The wire-based additive manufacturing can also be combined with the peening aspect. Furthermore, the machining would tend to benefit from being performed in a low temperature (preferably cryogenic) environment. This would tend to reduce or eliminate a need for liquid coolants (which tend to introduce a contamination risk) during machining. Also, the machining process tends to be facilitated by being performed in a low temperature environment due to the temporary strengthening associated with the low metal temperature, and noting that otherwise the aluminium alloy may be quite soft and difficult to machine due to its softness.

In some embodiments, once a part has been formed by the wire-based additive manufacturing process including in situ solution treatment, and with the option of being machined as part of the additive manufacturing process or for machining to be done subsequently, then a precipitation age hardening is performed. This may take the form of natural ageing, for example on emergence from the low temperature conditions of the wire-based additive manufacturing process, or artificial age hardening using an elevated temperature process (e.g. at about 160°C to about 190°C). In some cases, e.g. for the case of an RSR grade alloy, the age hardening temperature will likely be substantially higher than for cases where a wire is supplied by the ingot metallurgy route, and temperatures in excess of about 300°C (e.g. 325°C - 350°C) may be implemented for age hardening.

Advantageously, when using RSR alloys, the higher temperature resilience of the RSR alloy tends to make any heat affected zone from the welding process much smaller compared to when using aluminium alloys prepared by a conventional ingot metallurgy route. The use of the higher temperatures for age hardening the RSR alloys tends to provide for an enhanced level of stress relief and can be seen as a potential advantage of the process as well as providing for improved mechanical and/or temperature resilient properties.

In some embodiments, machining of a part is performed outside the wire-based additive manufacturing chamber. In such cases, the machining may be performed after age hardening since the product will tend to be more dimensionally stable in this condition as well as being easier to machine (for example, as a result of its harder condition).

Conventionally, the manufacture of an RSR grade of welding wire (e.g. a wire made of RSR grade aluminium alloy) tends to be extremely difficult and expensive. Many RSR alloys tend not to be able to be cast using traditional techniques and are normally produced by a process known as "melt spinning" where molten metal is dripped onto a spinning disk. The melt is then propelled tangentially at high speed from the disk into a ribbon form and is so is cooled. The ribbon is then chopped and compacted by hot isostatic pressing for subsequent onward processing. This tends to be an expensive production route.

What will now be described is an apparatus and process for the production of an RSR grade alloy wire for use in fusion welding. In some embodiments, the produced RSR grade alloy wire is used in the above described wire-based additive manufacturing process.

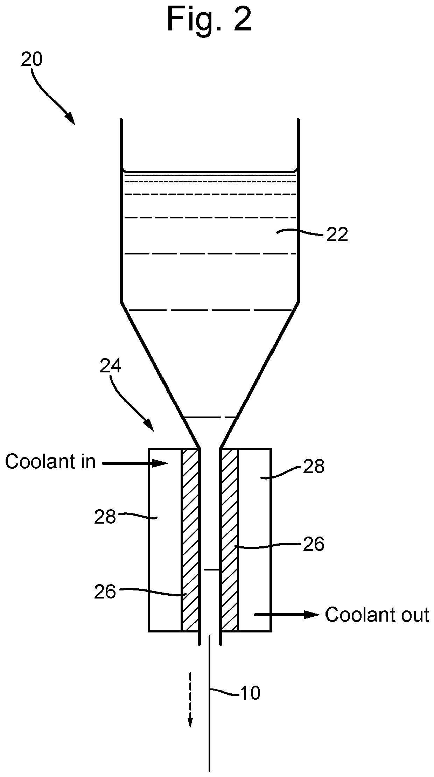

Figure 2 is a schematic illustration showing RSR grade wire production apparatus 20. The RSR grade wire production apparatus 20 comprises a molten RSR alloy supply 22, and a die block 24 comprising a tube 26 and a cooling sleeve 28 surrounding the tube 26.

A welding wire 10 made of an RSR composition is formed directly from molten RSR alloy 22 by injecting the molten RSR alloy 22 under pressure into the cooled die block 24. Preferably, this pressure is sufficient to achieve an exit velocity of the wire 10 that achieves the desired cooling rate. This pressure may be application dependent and may depend on parameter including but not limited to the design of the orifice of the tube 26 and the viscosity of the molten material.

The molten RSR alloy 22 is injected through a fine orifice of the tube 26. The tube 26 is cooled over its length by the cooling sleeve 28. The orifice of the tube 26 may be of the order of, for example, a 1mm diameter hole, and may include a narrowing taper to ensure intimate contact of the solidifying material with the inside of the die block 24. Thus, the diameter of the produced wire 10 may be 1mm or less. The length of the tube 26 may be designed to provide a predetermined cooling rate over the solidification temperature range (including any under cooling). This solidification temperature range might be expected to be of the order of about 200°C, with a target cooling rate of about 100°C per second or less over the length of the tube 26. Preferably, the target cooling rate is greater than or equal to about 100°C/s, e.g. about 100°C/s, about 200°C/s, about 300°C/s, about 400°C/s, about 500°C/s, about 600°C/s, about 700°C/s, about 800°C/s, about 900°C/s, or about 1,000°C/s. More preferably, the target cooling rate is at least about 1,000°C/s, for example between about 1,000°C/s and about 10,000°C/s (e.g. about 2,000°C/s, about 3,000°C/s, about 4,000°C/s, about 5,000°C/s, about 6,000°C/s, about 7,000°C/s, about 8,000°C/s, about 9,000°C/s, or about 10,000°C/s), or up to about 10⁴°C per second.

Preferably, the cooling rate applied to the RSR alloy 22 by the cooled die block 24 is approximately 10²°C /second or more. More preferably, the cooling rate applied to the RSR alloy 22 by the cooled die block 24 is approximately 10³°C /second or more. More preferably, the cooling rate applied to the RSR alloy 22 by the cooled die block 24 is approximately 10⁴°C /second or more. The velocity of the wire 10 expelled from the die block 24 may be of the order of 5m/s. The expelled wire 10 may be collected on a spool.

The die block 24 is a highly efficient heat exchanger. This tends to enable extraction of heat at a sufficient rate to form a stable solid RSR alloy wire 10, while also accounting for the latent heat of solidification as well as the reduction in temperature. For example, the tube 26 may be made of copper which has high thermal conductivity. Preferably, the cooled die block 24 is a cryogenically cooled die block, i.e. the cooling sleeve 28 cools the tube 26 cryogenically, e.g. using coolant which flows through the sleeve 28. This coolant may be a liquid or gaseous coolant for example, but is not limited to, nitrogen, argon, carbon dioxide, or helium. Preferably, the die block 24 is cooled to a temperature of about -150°C or below, about -200°C or below, or about -250°C or below. In some embodiments, the die block 24 is cooled to a temperature that is greater than about 150°C, for example, a temperature between about -100°C and about - 150°C, or between about -100°C and about -50°C. By way of example, the tube 26 is made of copper and is cooled by liquid nitrogen at about -196°C or below.

Preferably the walls of the tube 26 are thin, thus facilitating cooling of the RSR alloy 22 by the cooling sleeve 28.

The use of liquid helium tends to provide the possibility of enhancing the thermal conductivity of copper by using what is known as a "high RRR" grade. This is copper of high purity that, at temperatures below 20K exhibits particularly high levels of thermal conductivity that can represent approximately a 20-fold improvement over standard copper. By using a cryogenically cooled die block 24 with a fine orifice, it tends to be possible to cool liquid aluminium of an RSR composition sufficiently quickly to make a viable welding wire of the sort of diameter useful for wire-based additive manufacturing process.

The above described wire production process tends to be substantially cheaper than the alternative of melt spinning, chopping, compaction and HIPing. Advantageously, the above described wire production process tends not to need to achieve the ultimate cooling rates for full RSR attainment, but simply to allow the wire to be made with enough integrity to survive spooling and de spooling.

The RSR alloy 22 used may be any appropriate RSR alloy such as an aluminium-based RSR alloy. Example of an aluminium-based RSR alloy include, but are not limited to, aluminium with at least 8% iron, and Al-Mg-Sc-Zr alloys such as Al-Mg4Sc0.4Zr0.12.

## Claims

1. A wire-based additive manufacturing method for fabricating a three-dimensional object, the method comprising:
directing energy onto a growth surface of a workpiece (12) to form thereon a liquid melt-pool (11);
feeding additional material (10) into the melt-pool so as to cause the additional material to become incorporated into the liquid of the melt-pool; and
**characterised in that** the method further comprises cryogenically cooling the liquid melt-pool, thereby to achieve a cooling rate of the liquid melt pool of at least 1000°C per second and to cause the liquid melt-pool to solidify and wherein the additional material is aluminium or an aluminium alloy.

2. The additive manufacturing method according to claim 1, wherein the cryogenically cooling of the liquid melt-pool is after incorporation of the additional material into the liquid of the melt-pool, thereby causing the liquid melt-pool with the additional material incorporated therein to solidify.

3. The additive manufacturing method according to any to claim 1 or 2, wherein cryogenically cooling the liquid melt-pool comprises supplying cryogenic coolant (16) directly to the liquid melt-pool.

4. The additive manufacturing method according to claim 3, wherein the cryogenic coolant has a temperature of -50°C or below.

5. The additive manufacturing method according to claim 4, wherein the cryogenic coolant has a temperature of -150°C or below.

6. The additive manufacturing method according to any of claims 3 to 5, wherein the cryogenic coolant is a cryogenic liquid or gas.

7. The additive manufacturing method according to any of claims 3 to 6, wherein the cryogenic coolant is selected from a group consisting of liquid argon, liquid helium, liquid nitrogen, and liquid carbon dioxide.

8. The additive manufacturing method according to any of claims 1 to 7, wherein the additional material is an alloy that has been formed by rapid solidification rate, RSR, processing.

9. The additive manufacturing method according to any of claims 1 to 8, further comprising maintaining a low temperature environment in which to locate the workpiece, the low temperature environment having a temperature at or below -40°C.

10. The additive manufacturing method according to claim 9, further comprising machining the workpiece within the low temperature environment.

11. The additive manufacturing method according to any of claims 1 to 10, wherein the three dimensional object is a solution heated treated object.

## Patentansprüche

1. Drahtbasiertes additives Fertigungsverfahren zum Herstellen eines dreidimensionalen Objekts, das Verfahren umfassend:
Leiten von Energie auf eine Wachstumsoberfläche eines Werkstücks (12), um ein flüssiges Schmelzbad (11) darauf zu bilden;
Zuführen von zusätzlichem Material (10) in das Schmelzbad, um zu bewirken, dass das zusätzliche Material in die Flüssigkeit des Schmelzbades eingearbeitet wird; und
**dadurch gekennzeichnet, dass** das Verfahren ferner ein kryogenes Abkühlen des flüssigen Schmelzbades umfasst, wodurch eine Abkühlgeschwindigkeit des flüssigen Schmelzbades von mindestens 1000 °C pro Sekunde erreicht wird und bewirkt wird, dass das flüssige Schmelzbad sich verfestigt und wobei das zusätzliche Material Aluminium oder eine Aluminiumlegierung ist.

2. Additives Fertigungsverfahren nach Anspruch 1, wobei das kryogene Abkühlen des flüssigen Schmelzbades nach dem Einarbeiten des zusätzlichen Materials in die Flüssigkeit des Schmelzbades erfolgt, wodurch bewirkt wird, dass das flüssige Schmelzbad sich mit dem darin eingearbeiteten zusätzlichen Material verfestigt.

3. Additives Fertigungsverfahren nach einem der Ansprüche 1 oder 2, wobei das kryogene Abkühlen des flüssigen Schmelzbades ein direktes Liefern von kryogenem Kühlmittel (16) zu dem flüssigen Schmelzbad umfasst.

4. Additives Fertigungsverfahren nach Anspruch 3, wobei das kryogene Kühlmittel eine Temperatur von -50 °C oder darunter aufweist.

5. Additives Fertigungsverfahren nach Anspruch 4, wobei das kryogene Kühlmittel eine Temperatur von -150 °C oder darunter aufweist.

6. Additives Fertigungsverfahren nach einem der Ansprüche 3 bis 5, wobei das kryogene Kühlmittel eine kryogene Flüssigkeit oder ein kryogenes Gas ist.

7. Additives Fertigungsverfahren nach einem der Ansprüche 3 bis 6, wobei das kryogene Kühlmittel aus einer Gruppe ausgewählt ist, bestehend aus flüssigem Argon, flüssigem Helium, flüssigem Stickstoff und flüssigem Kohlendioxid.

8. Additives Fertigungsverfahren nach einem der Ansprüche 1 bis 7, wobei das zusätzliche Material eine Legierung ist, die durch Rascherstarrungsgeschwindigkeitsverarbeitung, RSR-Verarbeitung, gebildet wurde.

9. Additives Fertigungsverfahren nach einem der Ansprüche 1 bis 8, ferner umfassend ein Aufrechterhalten einer Niedertemperaturumgebung, in der das Werkstück zu finden ist, wobei die Niedertemperaturumgebung eine Temperatur von oder unter -40 °C aufweist.

10. Additives Fertigungsverfahren nach Anspruch 9, ferner umfassend ein Bearbeiten des Werkstücks innerhalb der Niedrigtemperaturumgebung.

11. Additives Fertigungsverfahren nach einem der Ansprüche 1 bis 10, wobei das dreidimensionale Objekt ein lösungserwärmtes behandeltes Objekt ist.

## Revendications

1. Procédé de fabrication additive à base de fils permettant de fabriquer un objet tridimensionnel, le procédé comprenant :
la direction de l'énergie sur une surface de croissance d'une pièce (12) pour former sur celle-ci un bain de fusion liquide (11) ;
l'introduction d'un matériau supplémentaire (10) dans le bain fondu de manière à amener le matériau supplémentaire à être incorporé dans le liquide du bain de fusion ; et
**caractérisé en ce que** le procédé comprend en outre le refroidissement cryogénique du bain de fusion liquide, pour ainsi obtenir une vitesse de refroidissement du bain de fusion liquide d'au moins 1000 °C par seconde et pour amener le bain de fusion liquide à se solidifier, et dans lequel le matériau supplémentaire est de l'aluminium ou un alliage d'aluminium.

2. Procédé de fabrication additive selon la revendication 1, dans lequel le refroidissement cryogénique du bain de fusion liquide intervient après l'incorporation du matériau supplémentaire dans le liquide du bain de fusion, amenant ainsi le bain de fusion liquide ainsi que le matériau supplémentaire incorporé dans celui-ci à se solidifier.

3. Procédé de fabrication additive selon l'une quelconque des revendications 1 ou 2, dans lequel le refroidissement cryogénique du bain de fusion liquide comprend la fourniture de réfrigérant cryogénique (16) directement au bain de fusion liquide.

4. Procédé de fabrication additive selon la revendication 3, dans lequel le réfrigérant cryogénique a une température d'au plus -50 °C.

5. Procédé de fabrication additive selon la revendication 4, dans lequel le réfrigérant cryogénique a une température d'au plus -150 °C.

6. Procédé de fabrication additive selon l'une quelconque des revendications 3 à 5, dans lequel le réfrigérant cryogénique est un liquide ou un gaz cryogénique.

7. Procédé de fabrication additive selon l'une quelconque des revendications 3 à 6, dans lequel le réfrigérant cryogénique est choisi dans un groupe constitué par de l'argon liquide, de l'hélium liquide, de l'azote liquide et du dioxyde de carbone liquide.

8. Procédé de fabrication additive selon l'une quelconque des revendications 1 à 7, dans lequel le matériau supplémentaire est un alliage qui a été formé par traitement à vitesse de solidification rapide, RSR.

9. Procédé de fabrication additive selon l'une quelconque des revendications 1 à 8, comprenant en outre le maintien d'un environnement à basse température dans lequel localiser la pièce, l'environnement à basse température ayant une température de -40 °C ou inférieure.

10. Procédé de fabrication additive selon la revendication 9, comprenant en outre l'usinage de la pièce dans l'environnement à basse température.

11. Procédé de fabrication additive selon l'une quelconque des revendications 1 à 10, dans lequel l'objet tridimensionnel est un objet traité par chauffage en solution.
